Europäisches Patentamt

European Patent Office

Office européen des brevets

(11) Publication number: **0 236 281**
A1

# (12) EUROPEAN PATENT APPLICATION

(21) Application number: **87830064.9**

(22) Date of filing: **25.02.87**

(51) Int. Cl.⁴: **B 01 D 50/00,** B 01 D 47/06

(30) Priority: **25.02.86 IT 1770286**

(43) Date of publication of application: **09.09.87**
**Bulletin 87/37**

(84) Designated Contracting States: **AT BE CH DE ES FR GB GR LI LU NL SE**

(71) Applicant: **MAR-FIN s.r.l., Via del Fanuccio N. 56, I-55014 Marlia, Capannori, Lucca (IT)**

(72) Inventor: **Arena, Antonio, Via della Chiesa 774/C Nave, I-55100 Lucca (IT)**
Inventor: **Rosellini, Maria Pia, Via della Chiesa 774/C Nave, I-55100 Lucca (IT)**

(74) Representative: **Mannucci, Gianfranco, Dott.-Ing., Ufficio Tecnico Ing. A. Mannucci Via della Scala 4, I-50123 Firenze (IT)**

(54) **Apparatus for cleaning air from gases through washing and cooling.**

㋑ The apparatus comprises: a washing chamber (5) with an intake opening (7), a shaped gate (9) which divides said chamber into a channel-like upper part (5A) with variable cross-section and into a lower washing part (5B), wherein the washing unit with at least one nozzle (12) is provided; and a cooling chamber (20) comprising a cooling set or battery (22); said lower part (5B) of said washing chamber (5) and said cooling chamber (20) communicate through an aperture (10); to said cooling chamber (20) an aspirator (30) with an activated carbon or equivalent filter (32) is associated.

"APPARATUS FOR CLEANING AIR FROM GASES THROUGH WASHING AND COOLING"

## DESCRIPTION

The apparatus has been designed for eliminating vapors, odours and fumes produced by oils heated up at high temperatures - in the range of 180/200°C - and it is therefore intended mostly for use in automatic, semi-automatic, manual frying equipment and in all those apparatuses demanding a suitable cleaning of gases generated during their working.

According to the invention, the apparatus for cleaning air from gases, vapors and fumes comprises a washing unit with at least one nozzle and a cooling unit being combined in a vacuum circuit operated by an aspirator and having an activated carbon or similar end filter.

Advantageously, the washing unit is disposed so as to project the liquid in counter-current direction in respect to the flow of gas to be cleaned.

Said washing unit may be fed with liquid acting in closed circuit, involving a pump, a filter and a tank which collects the liquid ejected by the nozzle(s), and may also comprise means for cooling the liquid in said closed circuit. The washing unit may sometimes function even according to an open cycle.

According to a feasible embodiment, the apparatus may comprise: a washing chamber having an intake opening, a shaped gate dividing said chamber into a channel-like upper part with variable cross-section and into a lower washing part, wherein the washing unit is provided with at least one nozzle; and a cooling chamber comprising a cooling set; said lower part of said washing chamber and said cooling chamber being in communication through an aperture; and to said cooling chamber an aspirator with activated carbon or equivalent filter being associated. The cooling set or battery may make part of a cooling unit provided with a compressor and a condenser. The washing chamber may form a tank for collecting the washing liquid ejected by the nozzle(s). The cooling set may be developed so as to cool the washing liquid inside said tank.

According to another feasible embodiment, the apparatus may comprise, inside a chamber, a cooling set or battery and at least one nozzle whose jet is oriented towards said cooling set and in a direction opposite to the gas flow between an intake opening, a suction opening and an aspirator; said chamber may also form a tank for collecting the washing liquid.

The drawing shows exemplary, non - limitative embodiments of the invention; in the drawing:

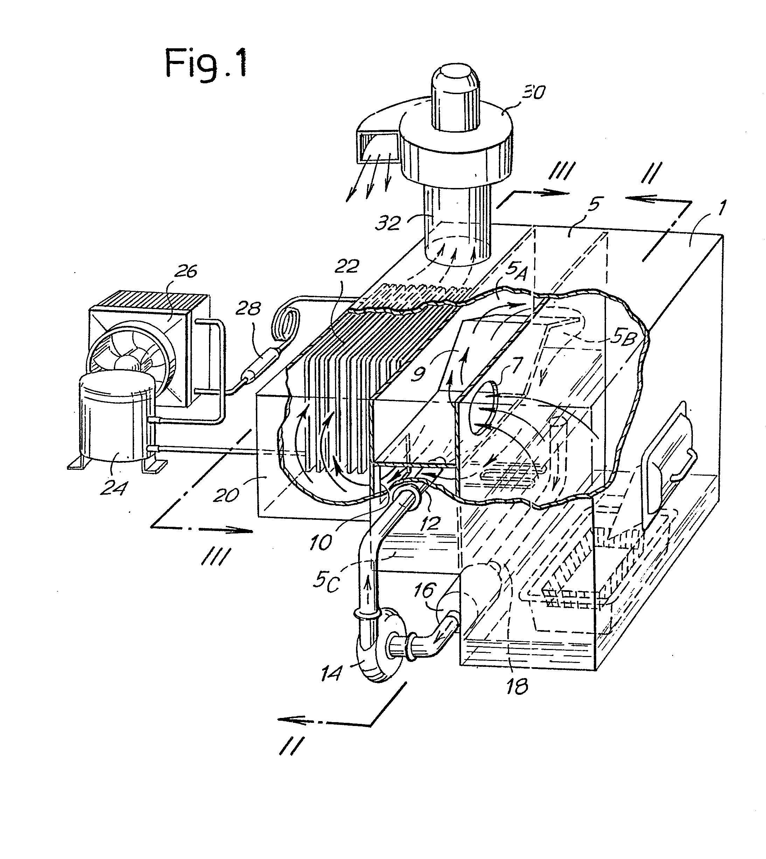

Fig. 1 shows an ensemble perspective view of an apparatus;

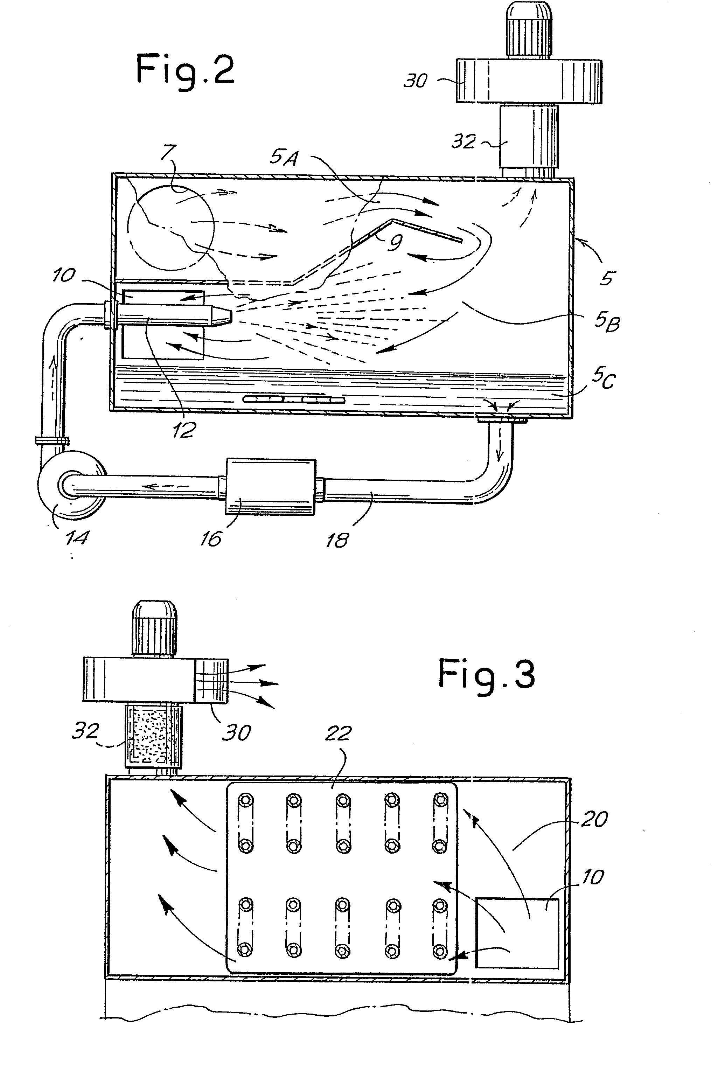

Figs. 2 and 3 show two sections on lines II-II and III-III of Fig. 1; and

Fig. 4 shows a modified embodiment.

In the drawing, numeral 1 indicates a chamber in which oil fumes and vapors are generated, like a cooking chamber for frying equipment with means for admitting and picking up the batches of product being treated from time to time.

Numeral 5 indicates a washing chamber whose bottom also makes up a tank for collecting and feeding the washing liquid in the closed cycle embodiment. An opening 7 provides the intake - by vacuum effect - of the stale air between chamber 1 and chamber 5.

In the chamber 5, a shaped separation gate 9 is provided which delimits, inside the chamber, an upper inlet part 5A forming a variable cross-section channel and a lower washing part 5B, in which a suction outlet opening 10 is provided; in said lower part 5B a washing unit is provided having one or more spraying nozzles 12, which are fed with washing liquid by a pump 14 which, sucks it out through a filter 16 housed in a conduit 18 from the bottom 5C of chamber 5.

The aperture 10 puts into communication the chamber 5 with an expansion and cooling chamber 20, which contains a cooling battery i.e. an evaporator 22 of a refrigeration unit including a compressor 24, a condenser 26 and a dehumidification filter 28.

To the chamber 20, an aspirator 30 is combined, which is associated with a filter 32 of the activated carbon type.

The aspirator 30, which is located at the outlet of the apparatus, causes a vacuum inside all the chambers thereby the gas, which is usually made up of air, water vapor, oil vapors and fumes generated inside the chamber 1, enters the aperture 7 in the upper part 5A and goes into the part 5B which makes up the very washing chamber; the special configuration of the separating gate 9 is such as to make the gas reach the washing chamber 5B with a steady and uniform density, as well as to give same gas a high turbulence thereby obtaining optimum conditions in the subsequent treatment. The washing process is carried out by means of the nozzle 12 or of a plurality of nozzles in order to obtain a diffused jet of water or other liquid which uniformly impinges on the whole conduit cross-section. The direction of the water flow from the nozzle(s) 12 is opposite to that of the gas in order to increase the relative speed between the two streams as well as the gas turbulence. The water (or other liquids) pressure and flow are determined according to the general phyisical dimensioning and the volume of gas to be treated. The water drawn out from the nozzle 12 is collected at the bottom 5C of the chamber 5 - which acts, as already mentioned, as a tank - and is reintroduced in circulation by the pump 14 after being cleaned by the cartridge type, removable and replaceable or regenerable filter 16. As long as the kind of installation allows it, the washing water may be drawn from a usual tap, thereby the gathered water can be discharged and the nozzle(s) then operates according to an open cycle.

The gas, after the washing, has already lost a considerable amount of the impurities and vapors, trans= ferred to the water as a consequence of the mechanical physical and chemical action of the jet produced by the nozzle 12. However, a suspension of water drops and residual vapors is still present in the gas, which suspension, unless knocked down, may provide a carrier for the lighter molecules of some substances (among which aldehydes and ketones) which are those mainly responsible for bad smells. The traditional activated-carbon filtering systems are in this case inefficient and expensive, owing to the high humidity rate present in the gas, which saturates in a short time the carbon absorbtion capability. In order to eliminate the vapors from the gas it is necessary to cool it: this causes the vapors condensation and the retention of the mist in the form of droplets on the walls of a heat exchanger for the cooling. This procedure is carried out inside the expansion and cooling chamber 20. The volume of this chamber 20 is greater than that of the other chamber, so that the gas going through the aperture 10 can naturally expand while decreasing its density, reducing its speed and thus improving the possibility of thermal exchange with the evaporator 22. The condensed particles, possibly entrained by the air flow, may be retained on whatever realized surfaces, either by friction, or impingement, or entrapment or electrical attraction, as well as directly by the evaporator set 22. The gas temperature is drastically reduced by the heat exchanger constituted by the finned evaporator 22 connected with the refrigerator unit 24, 26, 28.

The evaporator may also be a finned evaporator of a two-phase hot-water heating radiator or may be the secondary of a heat exchanger having the primary connected with one of the above mentioned plants.

The construction of the whole apparatus may be accomplished so that the jet of the nozzle(s) 12 also collides with a cold exchanger, thus lowering the washing water temperature and improving the overall efficiency.

The construction of the whole apparatus may be accomplished so that part of the exchanger made up of the evaporator 22, or other cold body, may be dipped in the water tank at the bottom 5C of the chamber 5, in order to lower the water temperature and improve the overall efficiency.

The gas going out is virtually devoid of vapors and fumes and it is then possible to improve the treatment with the activated carbon filter 32 - which removes the most volatile molecules that possibly escaped the previous treatments - without necessitating too frequent replacements and maintenance.

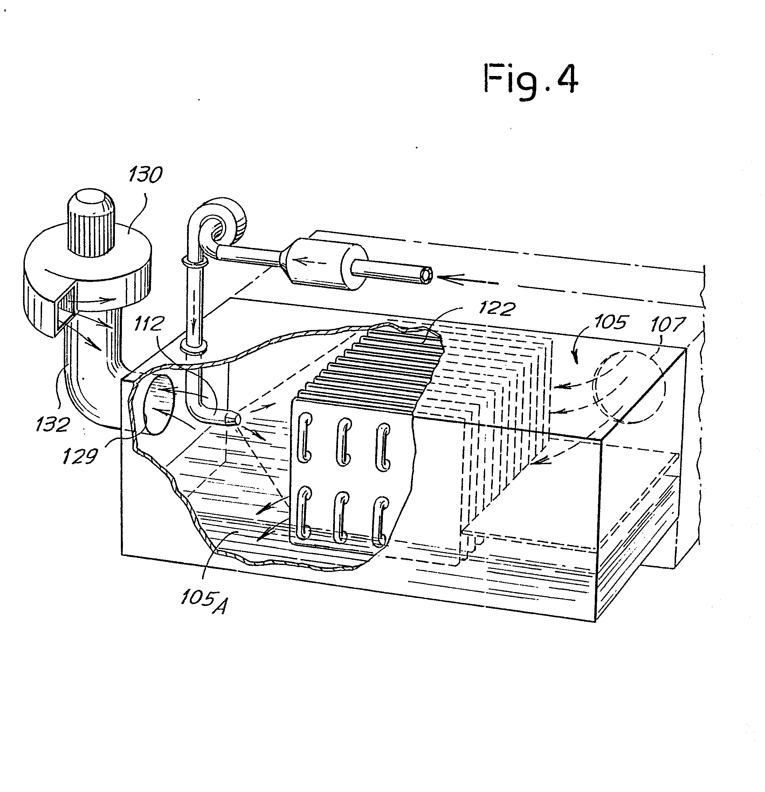

Fig. 4 shows schematically a modified embodiment according to which a chamber 105 contains a nozzle 112 and the set or battery of an evaporator 122. The gas to be cleaned is drawn by suction from an aperture 107 (corresponding to that indicated by 7), and the cleaned gas is expelled through an aperture 129, an aspirator 130 and an activated carbon filter 132. The nozzle 112 throws out water in a direction opposite to the gas flow and towards the set of the evaporator 122, which cools both the gas and the water of the jet, said water gathering at the bottom of the chamber 105 which forms the tank 105A.

CLAIMS

1) Apparatus for cleaning air from gases, vapors and fumes, characterized in that it comprises a washing unit with at least one nozzle(12, 112), and a cooling unit (22, 122), combined in a vacuum circuit operated by an aspirator (30, 130) and with an activated carbon or similar end filter (32, 132).

2) Apparatus according to the preceding claim, characterized in that the washing unit (12, 112) is disposed so as to project the liquid in counter-current direction in respect to the flow of gas to be cleaned.

3) Apparatus according to claims 1 or 2, characterized in that the washing unit (12, 112) is fed with liquid under a closed circuit involving a pump (14), a filter (16) and a tank for collecting the liquid ejected by the nozzle(s).

4) Apparatus according to claim 3, characterized in that it comprises means for the cooling of the liquid within said closed circuit.

5) Apparatus according to at least one of the preceding claims, characterized in that it comprises: a washing chamber (5) with an intake opening (7), a shaped gate (9) which divides said chamber into a channel-like upper part (5) having variable cross-section and into a lower washing part (5B) wherein the

washing unit with at least one nozzle (12) is provided; and a cooling chamber (20) including a cooling set or battery (22); said lower part (5B) of said washing chamber (5) and said cooling chamber being in communication through an aperture (10); and an aspirator (30) with an activated carbon or equivalent filter (32) being associated to said cooling chamber.

6) Apparatus according to claim 5, characterized in that the cooling set (22) makes part of a cooling unit with a compressor (24) and a condenser (26).

7) Apparatus according to claim 5, characterized in that said washing chamber (5) makes up a tank (5C) for the gathering of the washing liquid ejected by the nozzle(s).

8) Apparatus according to claim 7, characterized in that said cooling set (22) is so developed as to cool the washing liquid inside said tank (5C).

9) Apparatus according to claims 1 to 4, characterized in that it comprises, in a chamber (105), a cooling set (122) and at least one nozzle (112) whose jet is oriented towards said cooling unit and in a direction opposite to the gas flow between an intake opening (107), a suction opening (129) and an aspirator (130); said chamber (105) being able to form a tank (105A) for collecting the washing liquid.

**Fig.1**

Fig.2

Fig.3

0236281

Fig.4

# EUROPEAN SEARCH REPORT

**European Patent Office**

0236281

Application number

EP 87 83 0064

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 504 400 (E. BORNHÜTTER) <br><br> * Pages 7-9; claims 1,4,7; figures * | 1,4,5, 7,8 | B 01 D 50/00 <br> B 01 D 47/06 |
| A | US-A-3 960 992 (H.-P. CYRENNE) <br><br> * Claim 1; figures 1,2; abstract * | 1,2,4, 5,7 | |

TECHNICAL FIELDS SEARCHED (Int. Cl.4)

B 01 D

The present search report has been drawn up for all claims

| Place of search | Date of completion of the search | Examiner |
|---|---|---|
| THE HAGUE | 23-06-1987 | POLESAK, H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82